(19) Europäisches Patentamt
European Patent Office
Office européen des brevets

(11) **EP 1 563 990 B1**

(12) **EUROPEAN PATENT SPECIFICATION**

(45) Date of publication and mention
of the grant of the patent:
**08.08.2007 Bulletin 2007/32**

(51) Int Cl.:
***B32B 27/32*** *(2006.01)*

(21) Application number: **05002482.7**

(22) Date of filing: **07.02.2005**

(54) **Heat-shrinkable gas-barrier multi-layer thermoplastic film and receptacles for packaging made therefrom**

Heissschrumpffähige, gassperrende, thermoplastische Mehrschichtfolie und daraus hergestellte Behälter

Feuille multicouche thermoplastique thermorétractable, imperméable aux gaz et récipients pour l'emballage obtenus à partir desdites feuilles.

(84) Designated Contracting States:
**AT BE BG CH CY CZ DE DK EE ES FI FR GB GR HU IE IS IT LI LT LU MC NL PL PT RO SE SI SK TR**

(30) Priority: **11.02.2004 EP 04002994**

(43) Date of publication of application:
**17.08.2005 Bulletin 2005/33**

(73) Proprietor: **Cryovac, Inc.**
**Duncan, S.C. 29334 (US)**

(72) Inventors:
• **Fornasiero, Tito**
**20017 Rho (Milan) (IT)**

• **D'Apollo, Francesca**
**Piombino (Livorno) (IT)**
• **Ursino, Felice**
**20017 Rho (Milan) (IT)**

(74) Representative: **De Carli, Elda**
**Sealed Air S.r.l.,**
**Via Trento 7**
**20017 Passirana di Rho (MI) (IT)**

(56) References cited:
**US-A1- 2001 008 660**

**Description**

FIELD OF THE INVENTION

This invention relates to a heat-shrinkable, gas-barrier, multi-layer thermoplastic film and to the receptacles such as pouches, bags, and tubings suitable for packaging purposes made therefrom. In particular, this invention relates to heat-shrinkable gas-barrier plastic films and bags that are endowed with a good balance of shrink and optical properties and also have good mechanical properties even at low gauges.

BACKGROUND OF THE INVENTION

Shrinkable thermoplastic films have many useful applications in the packaging industry particularly for food products, such as meats, cheeses, poultry, seafood and numerous other products. For packaging some foodstuffs, for instance meat and some cheeses, the film should include a layer that is a barrier to the passage of gases, particularly oxygen.

Multilayer gas-barrier heat shrinkable films suitable for food packaging are commonly based on ethylene co-polymers, because of the toughness and low temperature shrinking characteristics of polyethylene resins which are particularly suitable when the film or bag is used for vacuum packaging. In such a case in fact the package, after vacuumization and sealing or clipping, is submitted to a heat treatment in order to shrink the packaging material and bring it into close contact with the packaged product and a too high temperature could negatively affect both the qualities of the packaged product and the appearance of the package ("blooming" of the fat and/or "cooking" of the blood).

The first example of multi-layer gas-barrier heat-shrinkable film for food packaging is a multi-layer film having the following sequence of layers polyethylene/PVDC/polyethylene, which has been disclosed in US-A-3,821,182.

With the aim of improving the film properties, such as optical, mechanical, and shrink properties, and/or improving processability, other structures have later been devised, such as those described in US-A-3,741,253 that share a layer of cross-linked ethylene-vinyl acetate copolymer (EVA) joined to an internal layer of PVDC in its turn joined to another layer of EVA, or those described in EP-A-92,897, EP-A-202,814 and EP-A-204,918 having a core PVDC layer with outer EVA layers, one or both of which may be blended with linear low density polyethylene (LLDPE).

With the entrance of new polymers in the market other structures have been proposed, still essentially based on polyethylene resins, such as those described in EP-A-292,894 (VLDPE/PVDC/VLDPE where VLDPE stands for very low density polyethylene), those described in US-A-5,041,316 with a core PVDC layer, at least a heat-sealing VLDPE layer, an outer thermoplastic layer and a further intermediate VLDPE layer between the barrier and the outer thermoplastic layer, those described in EP-A-613,772 to cross-linked structures with an outer layer of EVA and the other outer layer of one or more polyethylene resins, and those described in EP-A-597,502, EP-A-600,425 and other patents, comprising in the core and/or the outer layers homogeneous ethylene based resins.

These and other structures have shown to have more-or-less good optical properties and more-or-less good low temperature shrink properties. Satisfactory mechanical properties are generally obtained by operating on the overall thickness of the film, where more resistant structures are characterized by thicker gauges.

The use of certain resins, such as for instance certain homogeneous ethylene polymers, to improve the mechanical characteristics of the end film, very often creates processing problems both at the extrusion and orientation stage.

US 2001/0008660 describes a multi-layer packaging film comprising at least two core layers of PVDC and at least one core layer of propylene-ethylene random copolymer. The film is said to be suitable for packaging applications where toughness, resistance to puncture and high shrink values are important. However the use of a propylene-ethylene copolymer in the manufacture of films with low temperature shrink creates several processing problems and impairs the film shrink properties.

Although therefore multilayer packaging films in the prior art, such as those indicated above, may satisfy some of the needs in the packaging art, room for improvement exists in pursuit of a packaging film with a balance of good shrink and optical properties, easy processability, and improved mechanical characteristics so that satisfactory mechanical properties are obtained at lower gauges. A saving in plastic material due to the possibility of down gauging, would be a benefit from all possible aspects, as it means less consumption of oil derived products, less waste material to be recycled or disposed of, and less costs to the manufacturer and/or the end user.

OBJECT AND SUMMARY OF THE INVENTION

It is thus an object of the present invention to provide a packaging film with improved mechanical properties relative to other packaging films and comparable shrink properties.

It is another object of the present invention to provide a packaging film with improved mechanical properties relative to other packaging films, comparable shrink properties and comparable optics.

It is a further object of the present invention to provide a packaging film that is easily processable and can be manufactured by a stable and reproducible process.

In certain multilayer embodiments, it is an object of the present invention to provide the above-mentioned characteristics and also to provide some other objects, such as improved sealability characteristics, particularly through contamination, or improved grease resistance, or higher shrink tension with respect to films used in the past.

These and other objects are accomplished by a heat-shrinkable, multi-layer, gas-barrier, thermoplastic film according to the present invention.

The present invention provides a multi-layer, bi-axially oriented and bi-axially heat shrinkable, gas-barrier, thermoplastic film comprising:

(i) a first outer layer comprising one or more ethylene homo- or co-polymers;

(ii) a core gas-barrier layer;

(iii) a second outer thermoplastic layer; and

(iv) an inner layer comprising at least a major proportion of one or more propylene-ethylene-($C_4$-$C_8$)-$\alpha$-olefin terpolymers, wherein the total amount of ethylene and ($C_4$-$C_8$)-$\alpha$-olefin units in the terpolymer is at least 4 % by mole and the amount of propylene units is at least 70 % by mole.

It has been found that the presence of the inner layer (iv) gives an increased stiffness to the overall structure without leading to formation of creases and increased risk of crease fractures in the packages made therefrom. Therefore the presence of the inner layer (iv) provides end structures with good mechanical properties even at low gauges. At the same time it has been found that the presence of said inner layer (iv) does not negatively affect the optical and shrink properties of the overall structure.

DEFINITIONS

As used herein, the term "film" is used in a generic sense to include any flexible plastic web, regardless of whether it is film or sheet. Typically, films of and used in the present invention have however a thickness of 150 $\mu$m or less, preferably a thickness of 100 $\mu$m or less, and more preferably a thickness of 75 $\mu$m or less.

As used herein, the phrases "inner layer" and "internal layer" refer to any film layer having both of its principal surfaces directly adhered to another layer of the film.

As used herein, the phrase "outer layer" refers to any film layer having only one of its principal surfaces directly adhered to another layer of the film

As used herein, the phrases "seal layer", "sealing layer", "heat seal layer", and "sealant layer", refer to an outer layer involved in the sealing of the film to itself, to another layer of the same or another film, and/or to another article which is not a film.

As used herein, the term "core", and the phrase "core layer", refers to any inner film layer that preferably has a function other than serving as an adhesive or compatibilizer for adhering two layers to one another.

As used herein, the phrase "tie layer" refers to any inner film layer having the primary purpose of adhering two layers to one another.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, the phrases "heat-shrinkable," "heat-shrink," and the like, refer to the tendency of the film to shrink upon the application of heat, i.e., to contract upon being heated, such that the size of the film decreases while the film is in an unrestrained state. As used herein said term refer to films with a free shrink in each of the machine and the transverse directions, as measured by ASTM D 2732, of at least 5 % at 85 °C.

As used herein, the term "monomer" refers to a relatively simple compound, usually containing carbon and of low molecular weight, which can react to form a polymer by combining with itself or with other similar molecules or compounds.

As used herein, the term "co-monomer" refers to a monomer that is co-polymerized with at least one different monomer in a co-polymerization reaction, the result of which is a copolymer.

As used herein, the term "polymer" refers to the product of a polymerization reaction, and is inclusive of homo-polymers, and co-polymers.

As used herein, the term "homo-polymer" is used with reference to a polymer resulting from the polymerization of a single monomer, i.e., a polymer consisting essentially of a single type of mer, i.e., repeating unit.

As used herein, the term "co-polymer" refers to polymers formed by the polymerization reaction of at least two different monomers. For example, the term "co-polymer" includes the co-polymerization reaction product of ethylene and a α-olefin, such as 1-hexene. When used in generic terms the term "co-polymer" is also inclusive of, for example, ter-polymers. The term "co-polymer" is also inclusive of random co-polymers, block co-polymers, and graft co-polymers.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts.

As used herein, the phrase "homogeneous polymer" refers to polymerization reaction products of relatively narrow molecular weight distribution and relatively narrow composition distribution. Homogeneous polymers are structurally different from heterogeneous polymers, in that homogeneous polymers exhibit a relatively even sequencing of co-monomers within a chain, a mirroring of sequence distribution in all chains, and a similarity of length of all chains, i.e., a narrower molecular weight distribution. This term includes those homogeneous polymers prepared using metallocene, or other single-site type catalysts, as well as those homogenous polymers that are obtained using Ziegler Natta catalysts in homogenous catalysis conditions.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and an non-olefinic co-monomer co-polymerizable with the olefin, such as vinyl monomers, modified polymers thereof, and the like. Specific examples include polyethylene homo-polymer, polypropylene homo-polymer, polybutene homo-polymer, ethylene-α-olefin co-polymer, propylene-α-olefin co-polymer, butene-α-olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resin, polymethylpentene, etc.

As used herein the term "ionomer" refers to the products of polymerization of ethylene with an unsaturated organic acid, and optionally also with an unsaturated organic acid $(C_1-C_4)$-alkyl ester, partially neutralized with a mono- or divalent metal ion, such as lithium, sodium, potassium, calcium, magnesium and zinc. Typical unsaturated organic acids are acrylic acid and methacrylic acid because they are thermally stable and commercially available. Unsaturated organic acid $(C_1-C_4)$-alkyl esters are typically (meth)acrylate esters, e.g. methyl acrylate and isobutyl acrylate. Mixtures of more than one unsaturated organic acid comonomer and/or more than one unsaturated organic acid $(C_1-C_4)$-alkyl ester monomer can also be used in the preparation of the ionomer.

As used herein the term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like.

As used herein, the phrase "ethylene-α-olefin copolymer" refers to such heterogeneous materials as linear low density polyethylene (LLDPE) with a density usually in the range of from about 0.915 $g/cm^3$ to about 0.930 $g/cm^3$, linear medium density polyethylene (LMDPE) with a density usually in the range of from about 0.930 $g/cm^3$ to about 0.945 $g/cm^3$, and very low and ultra low density polyethylene (VLDPE and ULDPE) with a density lower than about 0.915 $g/cm^3$; and homogeneous polymers such as metallocene-catalyzed EXACT™ and EXCEED™ homogeneous resins obtainable from Exxon, single-site AFFINITY™ resins obtainable from Dow, and TAFMER™ homogeneous ethylene-α-olefin copolymer resins obtainable from Mitsui. All these materials generally include co-polymers of ethylene with one or more co-monomers selected from $(C_4-C_{10})$-α-olefin such as butene-1, hexene-1, octene-1, etc., in which the molecules of the copolymers comprise long chains with relatively few side chain branches or cross-linked structures.

As used herein, the term "adhered" is inclusive of films which are directly adhered to one another using a heat-seal or other means, as well as films which are adhered to one another using an adhesive which is between the two films. As used herein, the phrase "directly adhered", as applied to layers, is defined as adhesion of the subject layer to the object layer, without a tie layer, adhesive, or other layer therebetween. In contrast, as used herein, the word "between", as applied to a layer expressed as being between two other specified layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

As used herein the term "gas-barrier" when referred to a layer, to a resin contained in said layer, or to an overall structure, refers to the property of the layer, resin or structure, to limit to a certain extent passage through itself of gases.

When referred to a layer or to an overall structure, the term "gas-barrier" is used herein to identify layers or structures characterized by an Oxygen Transmission Rate (evaluated at 23°C and 0 % R.H. according to ASTM D-3985) of less than 500 cm$^3$/m$^2$.day.bar.

"Seal initiation temperature" is the sealing temperature at which, under certain test conditions, a minimum strength is obtained. The test to evaluate it consists in sealing films at different temperatures, cooling down the seals at ambient temperature and then performing a peel test on the seals. As used herein this term identifies the temperature at which a 5.08 $\mu$m (2-mil) film sealed to itself under a 275,8 KPa (40 psi) sealing bar pressure and with a dwell time of 0.5 s, gives a heat-seal strength of at least 2N/25.4 mm.

DETAILED DESCRIPTION OF THE INVENTION

The present invention provides a multi-layer, bi-axially oriented and bi-axially heat shrinkable, gas-barrier, thermoplastic film comprising:

    (i) a first outer layer comprising one or more ethylene homo- or co-polymers;

    (ii) a core gas-barrier layer

    (iii) a second outer thermoplastic layer; and

    (iv) an inner layer comprising at least a major proportion of one or more propylene-ethylene-(C$_4$-C$_8$)-$\alpha$-olefin terpolymers, wherein the total amount of ethylene and (C$_4$-C$_8$)-$\alpha$-olefin units in the terpolymer is at least 4 % by mole and the amount of propylene units is at least 70 % by mole.

In the above structure the first outer layer (i) will comprise one or more resins independently selected from the group consisting of polyethylene homo-polymer, heterogeneous or homogeneous ethylene-$\alpha$-olefin copolymer, ethylene-vinyl acetate co-polymer, ethylene-ethyl acrylate co-polymer, ethylene-butyl acrylate co-polymer, ethylene-methyl acrylate co-polymer, ethylene-acrylic acid co-polymer, ethylene-methacrylic acid co-polymer, ionomer and blends thereof in any proportion. Preferred resins will be ethylene-vinyl acetate copolymers, linear ethylene-$\alpha$-olefin copolymers, homogeneous or heterogeneous, and blends of two or more of these resins. Particularly preferred resins for the first outer layer (i) will comprise homogeneous and heterogeneous ethylene-$\alpha$-olefin copolymers with a density comprised between about 0.890 and about 0.925 g/cm$^3$, and more preferably with a density comprised between about 0.895 and about 0.915 g/cm$^3$ and blends thereof in any proportions. Said first outer layer will be the heat-sealing layer and the preferred resins for this layer will have a seal initiation temperature $\leq$ 110 °C, more preferably a seal initiation temperature $\leq$ 105 °C, and yet more preferably a sealing initiation temperature $\leq$ 100 °C. The thickness of said first outer layer (i) will be generally higher than 4 $\mu$m, preferably higher than 6 $\mu$m and even more preferably higher than 8 $\mu$m. Typically it will be comprised between 1/10 and ½ of the thickness of the overall structure.

The core gas-barrier layer (ii) comprises at least one gas barrier resin generally selected from vinylidene chloride copolymers (PVDC), ethylene-vinyl alcohol copolymers (EVOH), polyamides and acrylonitrile-based copolymers. Preferred resins are typically PVDC, EVOH, polyamides/copolyamides and blends of EVOH with polyamides/copolyamides.

The most preferred resin is PVDC. This term includes copolymers of vinylidene chloride and at least one mono-ethylenically unsaturated monomer copolymerizable with vinylidene chloride. The mono-ethylenically unsaturated monomer may be used in a proportion of 2-40 wt. %, preferably 4-35 wt. %, of the resultant PVDC. Examples of the mono-ethylenically unsaturated monomer may include vinyl chloride, vinyl acetate, vinyl propionate, alkyl acrylates, alkyl methacrylates, acrylic acid, methacrylic acid, and acrylonitrile. The vinylidene chloride copolymer can also be a terpolymer. It is particularly preferred to use a copolymer with vinyl chloride or (C$_1$-C$_8$)-alkyl (meth)acrylate, such as methyl acrylate, ethyl acrylate or methyl methacrylate, as the comonomers. It is also possible to use a blend of different PVDC such as for instance a blend of the copolymer of vinylidene chloride with vinyl chloride with the copolymer of vinylidene chloride with methyl acrylate. The PVDC may contain suitable additives as known in the art, i.e.stabilisers, antioxidizers, plasticizers, hydrochloric acid scavengers, etc. that may be added for processing reasons or/and to control the gas-barrier properties of the resin.

Ethylene-vinyl alcohol copolymers will be preferably employed when a particularly good flexibility is required or when a fully coextruded, irradiated structure is manufactured because EVOH withstands irradiation without being degraded, up to a very high energy level. It will be used alone or admixed with one or more polyamides and/or copolyamides.

Polyamides and copolyamides can also be employed alone as gas-barrier resins. Particularly preferred in this case are the partially aromatic polyamides/copolyamides such as the polyamide formed by polycondensation between methaxylylenediamine and adipic acid (MXD6), the polyamide formed from hexamethylenediamine and terephthalic acid or isophthalic acid (6T, 6I), the copolyamide formed from hexamethylenediamine, terephthalic acid and isophthalic acid (6I/6T) and the copolyamide formed from methaxylylenediamine, adipic acid and isophthalic acid (MXD6/MXDI).

In general amorphous or semi-crystalline polyamides/copolyamides are preferred.

Once the gas-barrier resin has been selected, its thickness will be set to provide for the desired oxygen transmission rate (OTR). High barrier structures will have an OTR below 100 cm$^3$/day.m$^2$.atm and preferably below 80 cm$^3$/day.m$^2$.atm and will be particularly suitable for meat packaging, including fresh red meat and processed meat. Higher OTR will be preferred for packaging e.g. most of the cheeses where generally OTR of from about 100 to about 500 cm$^3$/day.m$^2$.atm are preferred and from about 150 to about 450 cm$^3$/day.m$^2$.atm mostly preferred.

Typically the thickness of the barrier layer ranges from about 2 to about 10 $\mu$m, preferably from about 3 to about 8 $\mu$m, and more preferably from about 3.5 to about 7 $\mu$m.

As the outer abuse layer (iii) any thermoplastic material can be employed such as any polyolefin, modified polyolefin or any blend thereof. Polyamides or copolyamides and polyesters or copolyesters may also be employed.

The polyamide/copolyamide resins that could be used for the abuse layer (iii) may be aliphatic polyamides e.g., polyamide 6, polyamide 11, polyamide 12, polyamide 66, polyamide 69, polyamide 610, polyamide 612, and copolyamides including copolyamide 6/9, copolyamide 6/10, copolyamide 6/12, copolyamide 6/66, copolyamide 6769, and aromatic polyamides and copolyamides, such as 6I, 6I/6T, MXD6, MXD6/MXDI, etc.

Preferred thermoplastic polyesters may include those obtained from an acid component comprising an aromatic dibasic acid, such as terephthalic acid or isophthalic acid, and a glycol component comprising an aliphatic glycol, an alicyclic glycol or an aromatic glycol, such as ethylene glycol, diethylene glycol or cyclohexane dimethanol. The use of a co-polyester, formed starting from two or three species of acid component or/and glycol component, would be preferred.

Preferred resins for the outer abuse layer (iii) are however ethylene homo-polymers and ethylene co-polymers, and more preferred are ethylene-$\alpha$-olefin copolymers, particularly those with a density of from about 0.895 to about 0.925 g/cm$^3$, and more preferably of from about 0.900 and about 0.920 g/cm$^3$, ethylene-vinyl acetate copolymers, particularly those with a vinyl acetate content of from about 4 to about 14 % by weight, ionomers, and their blends.

The most preferred resins are ionomers. It has been shown in fact that processability of the end structures with an outer layer (iii) comprising an ionomer is improved, and a higher speed of orientation can be achieved.

The thickness of said outer layer (iii) is not critical and it is generally comprised between about 2 and about 20 $\mu$m, preferably between about 3 and about 15 $\mu$m and more preferably between about 4 and about 10 $\mu$m.

The overall structure also must contain an inner layer (iv) that comprises at least a major proportion of one or more propylene-ethylene-(C$_4$-C$_8$)-$\alpha$-olefin terpolymers, wherein the total amount of ethylene and (C$_4$-C$_8$)-$\alpha$-olefin units in the terpolymer is at least 4 % by mole and the amount of propylene units is at least 70 % by mole.

By "major proportion" it is meant that more than 50 % by weight of said layer (iv), calculated over the total weight thereof, consists of one or more propylene-ethylene-(C$_4$-C$_8$)-$\alpha$-olefin terpolymers. Preferably said layer (iv) will comprise from about 60 % up to 100 % by weight of one or more propylene-ethylene-(C$_4$-C$_8$)-$\alpha$-olefin terpolymers, and more preferably said layer (iv) will comprise from about 70 % to about 90 % by weight of one or more propylene-ethylene-(C$_4$-C$_8$)-$\alpha$-olefin terpolymers.

Suitable propylene-ethylene-(C$_4$-C$_8$)-$\alpha$-olefin terpolymers include those containing from 0.5 to 10 % by mole of ethylene derived units, preferably from 1 to 8 % by mole and more preferably from 1 to 6 % by mole, and from 0.5 to 20 % by mole of (C$_4$-C$_8$)-$\alpha$-olefin derived units, preferably from 1 to 15 % by mole and more preferably from 1.5 to 12 % by mole, and the balance to 100 % by weight of propylene derived units. Preferred (C$_4$-C$_8$)-$\alpha$-olefin comonomer in the manufacture of these terpolymers is butene-1. Preferred terpolymers are those containing from 1 to 8 % by mole of ethylene derived units, from 1 to 15 % by mole of butene-1 derived units, and the balance to 100 % of propylene derived units and even more preferred those containing from 1 to 6 % by mole of ethylene derived units, from 1.5 to 12 % by mole of butene-1 derived units and the balance to 100 % of propylene derived units. Suitable terpolymers are available commercially from e.g. Solvay, Basell, BASF, Chisso, etc.

Layer (iv) may consist of one or more propylene-ethylene-(C$_4$-C$_8$)-$\alpha$-olefin terpolymers, or of a blend of a major proportion of one or more propylene-ethylene-(C$_{4}$-$_8$)-$\alpha$-olefin terpolymers with a minor proportion of one or more other thermoplastic resins compatible therewith. Suitable compatible resins are for instance ethylene homo- and co-polymers, modified ethylene homo- and copolymers, and ethylene-propylene-diene terpolymers. More particularly specific examples of thermoplastic compatible resins that can suitably be blended with one or more propylene-ethylene-(C$_4$-C$_8$)-$\alpha$-olefin terpolymers in layer (iv) are ethylene-vinyl acetate copolymers, ethylene-$\alpha$-olefin copolymers, polyethylenes, anhydride modified ethylene-vinyl acetate copolymers, anhydride modified ethylene-$\alpha$-olefin copolymers, and EPDM. Particularly preferred thermoplastic compatible resins that can suitably be blended with one or more propylene-ethylene-(C$_4$-C$_8$)-$\alpha$-olefin terpolymers in layer (iv) are ethylene-vinyl acetate copolymers, and ethylene-$\alpha$-olefin copolymers. Especially preferred are ethylene-vinyl acetate copolymers with a content of VA derived units of from about 6 to about 20 wt. %, and even more preferred those with a content of VA derived units of from about 9 to about 18 wt. %, and ethylene-$\alpha$-olefin copolymers, either homogeneous or heterogeneous, with a density comprised between about 0.890 and about 0.930 g/cm$^3$, and even more preferred ethylene-$\alpha$-olefin copolymers with a density comprised between about 0.895 and about 0.925 g/cm$^3$.

The thickness of layer (iv) is generally comprised between 1/8 and ½ of the overall thickness of the end structure, and preferably between 1/6 and 2/5 of the overall thickness of the end structure. For films having an overall thickness of about 50 $\mu$m, the thickness of layer (iv) will typically be comprised between about 6 and about 25 $\mu$m and preferably between about 8 and about 20 $\mu$m.

Additional layers, such as for instance tie layers, to improve interlayer adhesion, may be present.

Tie layers may be disposed between the respective layers in case where a sufficient adhesion is not ensured between adjacent layers. The adhesive resin may preferably comprise one or more polyolefins, one or more modified polyolefins or a blend of the above. Specific, not limitative, examples thereof may include: ethylene-vinyl acetate copolymers, ethylene-(meth)acrylate copolymers, ethylene-$\alpha$-olefin copolymers, any of the above modified with carboxylic or preferably anhydride functionalities, elastomers, and a blend of these resins.

If the structure contains tie layers their thickness is generally comprised between about 0.5 and about 7 $\mu$m, and preferably between about 2 and about 5 $\mu$m.

Other layers may be present in the overall structure such as bulky structural layers to increase the thickness of the overall structure as desired, oxygen scavenging layers, additional gas-barrier layers, etc. as known in the art.

In all the film layers, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, antistatic agents, anti-fog agents or compositions, and the like additives known to those skilled in the art of packaging films.

The films according to the present invention are heat-shrinkable, i.e. they show a % free shrink in each direction of at least 5 % at 85 °C. Preferably however they show a % free shrink at 85 °C higher than 10 in at least one direction, more preferably a % free shrink at 85 °C higher than 10 in each direction. Preferred films are also those showing a % free shrink higher than 15 in at least one direction at a temperature of 85 °C and more preferred those showing a % free shrink higher than 20 in at least one direction at a temperature of 85 °C. Even more preferred are those films showing a % free shrink at 85 °C which is higher than 15 in each direction and mostly preferred are those films showing a % free shrink at 85 °C which is higher than 20 in each direction.

The films according to the present invention can be suitably manufactured by the so-called trapped-bubble process, which is a known process typically used for the manufacture of heat-shrinkable films for food contact packaging. According to said process, the multilayer film is co-extruded through a round die to obtain a tube of molten polymeric material which is quenched immediately after extrusion without being expanded, optionally cross-linked, then heated to a temperature which is above the Tg of all the resins employed and below the melting temperature of at least one of the resins employed, typically by passing it through a hot water bath, or alternatively by passing it through an IR oven or a hot air tunnel, and expanded, still at this temperature by internal air pressure to get the transversal orientation and by a differential speed of the pinch rolls which hold the thus obtained "trapped bubble", to provide the longitudinal orientation. Typical orientation ratios will be comprised between about 2 and about 6 in each direction and preferably between about 3 and about 5 in each direction. After being stretched, the film is quickly cooled while substantially retaining its stretched dimensions to somehow freeze the molecules of the film in their oriented state and rolled for further processing.

Cross-linking is typically obtained by passing the flattened tubing through an irradiation vault where it is irradiated by high-energy electrons. Depending on the characteristics desired, this irradiation dosage can vary from about 20 to about 200 kGy, preferably from about 30 to about 150 kGy.

Depending on the number of layers in the structure it may be advisable or necessary to split the co-extrusion step: a tube will first be formed of a limited number of layers, with layer (i) on the inside of the tube; this tube will be quenched quickly and before submitting it to the orientation step it will be extrusion-coated with the remaining layers, again quenched quickly, optionally cross-linked, and then passed to the orientation. During extrusion-coating the tube will be slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first coextrusion step, or this coating step can be repeated as many times as the layers which are to be added.

The extrusion-coating step is clearly also required when a film only partially cross-linked is desired. As an example, in the case of barrier structures comprising a PVDC layer that might be degraded/discolored by irradiation, it might be desirable to avoid cross-linking of the PVDC layer. In this case the irradiation step will be performed after the extrusion of the first group of layers, which would not comprise the PVDC barrier layer, and before extrusion coating.

Alternatively, the film according to the present invention may be obtained by flat extrusion (co-extrusion or extrusion coating) and biaxial stretching by a simultaneous or a sequential tenter process.

Still alternatively the film according to the present invention may be obtained by heat- or glue-laminating separately obtained webs each containing only part of the film sequence of layers.

The film of the present invention may be used as a flat film, and when used as a flat film for e.g. tray-lidding or Form-Fill-Seal applications, the thickness of the overall structure will be typically comprised between about 25 and about

50 μm, preferably between about 30 and about 40 μm

Preferably however the film of the present invention will be used as a tubing, or a bag to form a package in a conventional manner.

When used as a tubing or as bag, the overall thickness of the film will typically be comprised between about 35 and about 75 μm, preferably between about 40 and about 65 μm, and even more preferably between about 42 and about 60 μm.

In a preferred embodiment the film is obtained as a seamless tubular film and it can be wound and then used as such to make bags of suitable size at the customer packaging plant or it can be converted into bags at the film manufacturing plant. In particular end sealed (ES) bags are individually formed by transversely sealing and severing across the seamless tubular film as it is laid flat, while side sealed (TS) bags may be made by slitting the seamless tubular film along one of its edges after which it is transversely sealed and severed into bags. The side seals are the sealing and severing seams and the bottom of the bag is the unslit edge of the film. Other bag and pouch making methods known in the art may be readily adapted to make receptacles from the multilayer film according to the present invention.

In packaging, the product will be loaded into a heat-shrinkable bag made of the film of the invention, the bag will normally be evacuated, and the open end thereof will be closed by heat-sealing or by applying a clip, e.g. of metal. This process is advantageously carried out within a vacuum chamber where the evacuation and application of the clip or heat seal is done automatically. After the bag is removed from the chamber it is heat shrunk by applying heat. This can be done, for instance, by immersing the filled bag into a hot water bath or conveying it through a hot water shower or a hot air tunnel, or by infrared radiation. The heat treatment will produce a tight wrapping that will closely conform to the contour of the product therein.

A heat shrinkable bag from a film of the invention has wide applications, particularly for meat, poultry, and some dairy products. The shrink properties of the film will in fact guarantee relatively complete shrinkage of the bag around the product, so that the bag is not wrinkled, thus offering an attractive package. The bag will have mechanical properties that will allow it to physically survive the process of being filled, evacuated, sealed, closed, heat shrunk, boxed, shipped, unloaded, and stored at the retail supermarket, and a sufficient stiffness to improve also its loading process.

The invention can be further understood by reference to the following examples that are merely illustrative and are not to be interpreted as a limitation to the scope of the present invention that is defined by the appended claims.

In the following examples the resins indicated in Table I below have been employed:

TABLE I

| EPBT1 | Ethylene-propylene-butene terpolymer 1.5 % by mole of Et, 10 % by mole of Bu, and the complement to 100 % of Pr. MI 5 g/10 min (230°C /2.16 Kg) and m.p. 131 °C - Eltex PKS 359 by Solvay |
|---|---|
| EPBT2 | Ethylene-propylene-butene terpolymer (3 % by mole Et, 2 % by mole Bu) - MI 5.5 g/10 min (230°C /2.16 Kg) and m.p. 135°C. Adsyl 5C37F by Basell |
| EC1 | Heterogeneous ethylene-$\alpha$-olefin copolymer with d = 0.911 g/cm$^3$ and MI = 6 g/10 min - Stamylex 08-076F by DSM |
| EC2 | Homogeneous ethylene-$\alpha$-olefin copolymer with d = 0.900 g/cm$^3$ and MI = 6 g/10 min - Affinity PL1280 by Dow |
| EC3 | Heterogeneous ethylene-$\alpha$-olefin copolymer with d = 0.905 g/cm$^3$ and MI = 1 g/10 min - Attane SL4102 by Dow |
| EC4 | Homogeneous ethylene-$\alpha$-olefin copolymer with d = 0.904 g/cm$^3$ and MI = 1 g/10 min - Affinity PL1881 by Dow |
| EC5 | Heterogeneous ethylene-$\alpha$-olefin copolymer with d = 0.920 g/cm$^3$ and MI = 1 g/10 min - Dowlex 2045E by Dow |
| EC6 | Homogeneous ethylene-$\alpha$-olefin copolymer with d = 0.918 g/cm$^3$ and MI = 1 g/10 min - Exceed 1018CA by ExxonMobil |
| EC7 | Heterogeneous ethylene-$\alpha$-olefin copolymer with d = 0.905 g/cm$^3$ and MI = 0.8 g/10 min - Attane 4203 by Dow |
| EVA1 | Ethylene-vinyl acetate copolymer (18 wt. % VA - MI = 0.7 g/10 min) - Elvax 3165 by DuPont |
| EVA2 | Ethylene-vinyl acetate copolymer (12 wt. % VA - MI = 0.5 g/10 min) - Escorene UL00112 by ExxonMobil |
| EVA3 | Ethylene-vinyl acetate copolymer (17 wt. % VA - MI = 2 g/10 min) - Evatane 1020 VN5 by ElfAtochem |

(continued)

| | | |
|---|---|---|
| EVA4 | Ethylene-vinyl acetate copolymer (14 wt. % VA - MI = 0.4 g/10 min) - Evatane 1003 VN 4 by ElfAtochem |
| EVA5 | Ethylene-vinyl acetate copolymer (9 wt. % VA - MI = 1.5 g/10 min) - Evatane 1010 VN 3 by ElfAtochem |
| EVA6 | Ethylene-vinyl acetate copolymer (20 wt. % VA - MI = 0.65 g/10 min) - Escorene FL00119 by ExxonMobil |
| EVA7 | Ethylene-vinyl acetate copolymer (14 wt. % VA - MI = 0.25 g/10 min) - Escorene Ultra FL00014 by ExxonMobil |
| EVA8 | Ethylene-vinyl acetate copolymer (26 wt. % VA - MI = 2 g/10 min) - Escorene UL00206 by ExxonMobil |
| EVA9 | Ethylene-vinyl acetate copolymer (9 wt. % VA - MI = 3 g/10 min) - Escorene Ultra FL00309 by ExxonMobil |
| ION | Ionomer (Na methacrylate) MI 1.3 g/10 min d = 0.94 $g/cm^3$ - Surlyn 1601 by DuPont |
| AD1 | Anhydride grafted EVA (18%)/ EMA - Bynel CXA3101 by Du Pont - MI 3.2 g/10 min |
| EPDM | Ethylene-propylene-diene terpolymer d = 0.870 $g/cm^3$ (79 % by weight Et, 6 % by weight ENB) - Vistalon 7800 by ExxonMobil |
| PVDC1 | PVDC containing 2 wt. % of plasticiser |
| PVDC2 | PVDC containing 7.5 wt. % of plasticizer |
| MB | EVA-based masterbatch - Sarmaprene Red 32592 by Sarma |
| EMAA | Ethylene-methacrylic acid copolymer (12 wt. % MA - MI = 1.4 g/10 min) Nucrel 1202 by DuPont |

➤ Melt Flow Indexes (MI's) are measured by ASTM D-1238 and are reported in grams/10 minutes. Unless otherwise indicated the conditions used are 190°C/2.16 kg.
➤ Unless otherwise specifically indicated, all percentages are by weight.
➤ Melting points, if not otherwise indicated, have been determined by DSC following ASTM D-3418 (2nd heating - 10 °C/min).

EXAMPLES

EXAMPLES 1 TO 14

Six layer structures have been prepared by coextrusion of a substrate consisting of a first (sealing) outer layer (i), a layer (iv), and an adhesive layer (v), followed by quenching of the extruded three layer tubular film, irradiation at the dosage reported and extrusion coating thereof with a barrier layer (ii), a second adhesive layer (v') and an outer abuse layer (iii). The obtained tube is then rapidly cooled and biaxially oriented by passing it through a hot water bath (about 95-98°C), then inflating to get transverse orientation and stretching to get longitudinal orientation. The orientation ratios were about 3.8 x 3.6.
The resins used for the different layers, the partial thickness of each layer and the irradiation dosage are reported in Table II below.

EXAMPLES 15 TO 36

Seven layer structures have been prepared following substantially the process described above with the only difference that the coextruded substrate comprised four layers : an outer sealing layer (i), an adhesive layer (v''), a layer (iv), and another adhesive layer (v). The sequence of layers at the coating was as indicated in examples 1 to 14 : a barrier layer (ii), an adhesive layer (v'), and an outer abuse layer (iii). The coating was simultaneous.
The resins used for the different layers of the structures of examples 15 to 36, the thickness of each layer, and the irradiation dosage are reported in following Table III.
The % free shrink at 85 °C and the modulus of elasticity in LD and TD of some representative structures of the examples are reported in Table IV.
The % free shrink was measured according to ASTM D 2732 by immersing for 5 seconds specimens of the structures (10 cm x 10 cm) into a hot water bath set at 85 °C and then calculating the % free shrink in each direction by the equation :

$$\% \text{ free shrink} = (L_0 - L_f)/L_0 \times 100$$

wherein $L_0$ is the initial length of side and $L_f$ is the length of side after shrinking.

The modulus of elasticity or Young's modulus has been measured in LD and in TD according to ASTM D-882-81 and is expressed in $kg/cm^2$. A modulus is a measure of material's stiffness.

Also reported in Table IV is the puncture resistance at 90 °C, i.e. the resistance force arising when pushing a punch heated at 90 °C against a surface of flexible film. The test method used in the present evaluations is described briefly herein below : a film sample (6.5 cm x 6.5 cm) is fixed in a specimen holder connected to a compression cell (1-50 kg normal sensitivity) mounted on a dynamometer (an Instron tensile tester); when the dynamometer is started, a punch (a punching sphere, 5-mm in diameter, soldered on a plunger) kept at 90 °C is brought against the film sample at a constant speed (30 cm/min) and the force needed to puncture the sample is graphically recorded and reported in grams.

In Table IV there are also reported qualitative evaluations of the optical properties of the structures and of the processability thereof, particularly in terms of extrusion and orientation of the structures. In these last two columns the following symbols have been used with the following meaning : μ highly satisfactory; o fairly satisfactory; u acceptable; v unsatisfactory.

In Table IV, the values obtained with the compounds of the present invention can be compared with those obtained with a commercial product ("Comparison") having a two layer substrate (VLDPE/EVA) irradiated and coated with a PVDC barrier layer and an outer EVA layer.

TABLE II

| Ex. no. | (i) (μm) | (iv) (μm) | (v)(μm) | Irrad. dosage (kGy) | (ii) (μm) | (v') (μm) | (iii) (μm) |
|---|---|---|---|---|---|---|---|
| 1 | 80% EC2 + 20% EC1 (10.5) | EPBT1 (17.7) | EVA3 (2.8) | 30 | PVDC1 (4) | EVA3 (2.5) | 40% EC4 + 60% EVA4 (10.5) |
| 2 | EC2 (10) | 80% EPBT1 + 20% EPDM (19) | EVA3 (3) | 40 | PVDC2 (5) | EVA3 (4) | ION (8) |
| 3 | 80% EC2 + 20% EC1 (10) | 80% EPBT1 + 20% EC1 (18.5) | EVA3 (3) | 40 | PVDC2 (5) | EVA3 (3.5) | ION (8) |
| 4 | 80% EC2 + 20% EC1 (10) | 80% EPBT1 + 20%EVA4 (17) | 30% EPBT1 + 70% EVA4 (4.5) | 40 | PVDC2 (5) | EVA3 (3.5) | 60% EC4 + 40% EC1 (8.5) |
| 5 | EC2 (10.5) | 80% EPBT1 + 20%EVA3 (18.2) | EVA3 (4.1) | 40 | PVDC2 (5.3) | EVA3 (3.6) | ION (6.5) |
| 6 | EC2 (10.5) | 80% EPBT1 + 20%EVA1 (18.2) | EVA1 (4.1) | 40 | PVDC2 (5.3) | EVA1 (3.6) | ION (6.5) |
| 7 | EC2 (10.5) | 80% EPBT1 + 20%EVA4 (18.2) | EVA4 (4.1) | 40 | PVDC2 (5.3) | EVA4 (3.6) | ION (6.5) |

(continued)

| Ex. no. | (i) (μm) | (iv) (μm) | (v)(μm) | Irrad. dosage (kGy) | (ii) (μm) | (v') (μm) | (iii) (μm) |
|---|---|---|---|---|---|---|---|
| 8 | EC2 (10.5) | 80% EPBT1 + 20% EVA5 (18.2) | EVA5 (4.1) | 40 | PVDC2 (5.3) | EVA3 (3.6) | ION (6.5) |
| 9 | EC2 (10.5) | 80% EPBT1 + 20% EVA4 (15.8) | 20% EPBT1 + 80% EVA4 (4.5) | 40 | PVDC2 (5.3) | EVA3 (3.6) | 60% EC4 + 40% EC1 (8.5) |
| 10 | 90% EC2 + 10% EC1 (10.5) | 80% EPBT1 + 20% EVA4 (15.8) | 20% EPBT1 + 80% EVA4 (4.5) | 40 | PVDC2 (5.3) | EVA3 (3.6) | 60% EC4 + 40% EC1 (8.5) |
| 11 | 90% EC2 + 10% EC1 (10.5) | 80% EPBT1 + 20% EVA1 (15.8) | 20% EPBT1 + 80% EVA1 (4.5) | 40 | PVDC2 (5.3) | EVA1 (3.6) | 60% EC4 + 40% EC1 (8.5) |
| 12 | 90%EC2+10% EC1 (10.5) | 80% EPBT1 + 20% EVA3 (15.8) | 20% EPBT1 + 80% EVA3 (4.5) | 40 | PVDC2 (5.3) | EVA3 (3.6) | 60% EC4 + 40% EC1 (8.5) |
| 13 | EC2 (10.5) | 80% EPBT1 + 20% EVA3 (18.2) | EVA3 (4.1) | 40 | PVDC2 (5.3) | EVA3 (3.6) | 80% EPBT1 + 20% EVA3 (6.5) |
| 14 | EC2 (10.5) | 70% EPBT1 + 30% EC3 (19.4) | 70% EVA1 + 30% MB (2.8) | 40 | PVDC2 (5.3) | EVA1 (3.6) | ION (6.5) |

TABLE III

| Ex. No. | (i) (μm) | (v") (μm) | (iv) (μm) | (v) (μm) | Irrad. Dosage (kGy) | (ii) (μm) | (v') (μm) | (iii) (μm) |
|---|---|---|---|---|---|---|---|---|
| 15 | EC2 (10) | 30% EPBT1 + 70% EVA4 (4) | 80% EPBT1 + 20% EPDM (12) | 30% EPBT1 + 70% EVA4 (4) | 40 | PVDC2 (5) | EVA4 (5) | 60% EC4 + 40% EC1 (8) |
| 16 | EC2 (10) | EVA6 (2.8) | 80% EPBT1 + 20% EVA6 (16.6) | EVA6 (2.8) | 40 | PVDC2 (5.3) | EVA6 (3.6) | ION (6.5) |

(continued)

| Ex. No. | (i) (μm) | (v") (μm) | (iv) (μm) | (v) (μm) | Irrad. Dosage (kGy) | (ii) (μm) | (v') (μm) | (iii) (μm) |
|---|---|---|---|---|---|---|---|---|
| 17 | EC2 (10.5) | EVA1 (2.8) | 80% EPBT1 + 20% EVA1 (16.6) | EVA1 (2.8) | 40 | PVDC2 (5.3) | EVA1 (3.6) | ION (6.5) |
| 18 | EC2 (10.5) | EVA1 (2.8) | EPBT1 (16.6) | EVA1 (2.8) | 40 | PVDC2 (5.3) | EVA1 (3.6) | ION (6.5) |
| 19 | EC2 (10.5) | EVA1 (2.8) | 80% EPBT1 + 20% EVA1 (16.6) | EVA1 (2.8) | 40 | PVDC2 (5.3) | EVA1 (3.6) | 70% EVA7 + 30% EC1 (6.5) |
| 20 | EC2 (10.5) | EVA1 (2.8) | 80% EPBT1 + 20% EVA1 (16.6) | EVA1 (2.8) | 40 | PVDC2 (5.3) | EVA1 (3.6) | 70% EVA9 + 30% EC5 (6.5) |
| 21 | EC2 (10.5) | EVA1 (2.8) | 80% EPBT1 + 20% EVA1 (16.6) | EVA1 (2.8) | 40 | PVDC2 (5.3) | EVA1 (3.6) | 70% EVA8 + 30% EC5 (6.5) |
| 22 | EC2 (10.5) | EVA1 (2.8) | 80% EPBT1 + 20% EVA1 (16.6) | EVA1 (2.8) | 40 | PVDC2 (5.3) | EVA1 (3.6) | EMAA (6.5) |
| 23 | EC2 (10.5) | 80% EVA1 + 20% MB (2.8) | 80% EPBT1 + 20% EVA1 (16.6) | 80% EVA1 + 20% MB (2.8) | 40 | PVDC2 (5.3) | EVA1 (3.6) | 70% EVA9 + 30% EC1 (6.5) |
| 24 | EC2 (10.5) | 80% EVA1 + 20% MB (2.8) | 80% EPBT1 + 20% EVA1 (16.6) | 80% EVA1 + 20% MB (2.8) | 40 | PVDC2 (5.3) | EVA1 (3.6) | ION (6.5) |
| 25 | EC2 (10.5) | 80% EVA1 + 20% MB (2.8) | EPBT1 (16.6) | 80% EVA1 + 20% MB (2.8) | 40 | PVDC2 (5.3) | EVA1 (3.6) | ION (6.5) |
| 26 | EC2 (10.5) | 85% EVA9 + 15% AD1 (3.2) | 90% EPBT1 + 10% EVA9 (16.6) | 85% EVA9 + 15% AD1 (3.2) | 40 | PVDC2 (5.3) | 85% EVA9 + 15% AD1 (2.8) | ION (6.4) |

(continued)

| Ex. No. | (i) (μm) | (v'') (μm) | (iv) (μm) | (v) (μm) | Irrad. Dosage (kGy) | (ii) (μm) | (v') (μm) | (iii) (μm) |
|---|---|---|---|---|---|---|---|---|
| 27 | EC2 (10.5) | EVA2 (3.2) | 80% EPBT1 + 20% EVA7 (16.6) | EVA2 (3.2) | 40 | PVDC2 (5.3) | 85% EVA7 + 15% AD1 (2.8) | ION (6.4) |
| 28 | EC2 (10.5) | EVA2 (3.6) | 80% EPBT1 + 20% EVA7 (16.6) | EVA2 (4.1) | 40 | PVDC2 (5.3) | 85% EVA2 + 15% AD1 (2.4) | ION (5.6) |
| 29 | EC2 (10.5) | 70% EVA1 + 30% EPBT1 (3.6) | 80% EPBT1 + 20% EVA1 (16.6) | 70% EVA1 + 30% EPBT1 (4.1) | 40 | PVDC2 (5.3) | EVA1 (2.4) | ION (5.6) |
| 30 | EC2 (10.5) | 70% EVA1 + 30% EPBT1 (3.6) | 80% EPBT1 + 20% EVA1 (16.6) | 70% EVA1 + 30% EPBT1 (4.1) | 40 | PVDC2 (5.3) | EVA1 (4.9) | EC4 (3.2) |
| 31 | EC1 (10.5) | 80% EVA1 + 20% MB (2.8) | 90% EPBT1 + 10% EVA1 (16.6) | 80% EVA1 + 20% MB (2.8) | 40 | PVDC2 (5.3) | EVA1 (3.6) | ION (6.5) |
| 32 | EC2 (10.5) | 80% EVA1 + 20% MB (2.8) | 90% EPBT1 + 10% EVA1 (16.6) | 80% EVA1 + 20% MB (2.8) | 64 | PVDC2 (5.3) | EVA1 (3.6) | ION (6.5) |
| 33 | EC2 (10.5) | EVA1 (2.8) | 90% EPBT1 + 10% EVA1 (16.6) | EVA1 (2.8) | 40 | PVDC2 (5.3) | 70% EVA1 + 30% MB (3.6) | ION (6.5) |
| 34 | EC2 (10.5) | EVA1 (2.8) | 93% EPBT1 + 7% MB (16.6) | EVA1 (2.8) | 40 | PVDC2 (5.3) | EVA1 (3.6) | ION (6.5) |
| 35 | EC2 (10.5) | 80% EVA2 + 20% MB (2.8) | 90% EPBT1 + 10% EVA2 (16.6) | 80% EVA2 + 20% MB (2.8) | 40 | PVDC2 (5.3) | EVA1 (3.6) | ION (6.5) |

(continued)

| Ex. No. | (i) (μm) | (v'') (μm) | (iv) (μm) | (v) (μm) | Irrad. Dosage (kGy) | (ii) (μm) | (v') (μm) | (iii) (μm) |
|---|---|---|---|---|---|---|---|---|
| 36 | EC2 (10.5) | 65% EVA9 + 15% AD1 + 20% MB (2.8) | 90% EPBT1 + 10% EVA9 (16.6) | 65% EVA9 + 15% AD1 + 20% MB (2.8) | 40 | PVDC2 (5.3) | EVA1 (3.6) | ION (6.5) |

TABLE IV

| Structure of ex. No. | Total thickness (μm) | % free shrink at 85 °C (L/T) | Modulus (LD/TD) kg/cm$^2$ | Puncture resistance 90 °C (g) | Optics | Processability |
|---|---|---|---|---|---|---|
| 1 | 48 | na | 4200/4000 | na | μ | o |
| 2 | 49 | 29/42 | 7000/5800 | 965 | μ | u |
| 5 | 48 | 32/42 | 2950/2950 | 885 | μ | o |
| 6 | 47 | 33/44 | 3000/2750 | 738 | μ | μ |
| 14 | 47 | 32/44 | 3430/3620 | 739-709 | μ | μ |
| 16 | 48 | 37/49 | 4280/4000 | 786-692 | μ | μ |
| 17 | 49 | 37/49 | 4030/4140 | 799-677 | μ | μ |
| 19 | 49 | 39/48 | 3000/2400 | na | o | o |
| 22 | 50 | 34/49 | na | na | o | υ |
| 24 | 47 | 35/47 | 3650/3480 | 773-693 | μ | μ |
| 29 | 46 | 34/47 | 3700/2800 | 749-731 | μ | μ |
| 33 | 44 | 35/50 | 4270/4910 | 779-729 | μ | μ |
| 34 | 49 | 33/46 | 3870/3950 | 772-728 | o | μ |
| Comparison | 58 | 32/45 | 1200/1100 | 435 | μ | o |

EXAMPLES 37-38 AND COMPARATIVE EXAMPLES 39-40

The four structures reported in Table V below have been manufactured by following substantially the same process as in Example 15. The process used for the manufacture of these structures was the same but orientation of the structures of Comparative Examples 39 and 40 had to be carried out at a lower orientation speed (orientation speed is the speed, expressed in m/min, at which the flattened tape is fed to the heating bath before being inflated and stretched). While the maximum orientation speed for the structures of Examples 37 and 38 was 14 and 13 m/min respectively, for Comparative Examples 39 and 40 the maximum orientation speed was 8 m/min as at an orientation speed higher than 8 m/min the process was unstable and orientation could not be achieved. Furthermore also the bubble width had to be reduced from a nominal value of 350 mm (used with the structures of Examples 37 and 38) to a nominal value of 325 mm for the structures of Comparative Examples 39 and 40 because with a bubble width set at 350 mm with these latter structures the bubble bursted.

EPC, used in layer (iv) in Comparative Examples 39 and 40 is a propylene-ethylene random copolymer with MI 5 g/10 min (230 °C/2.16 kg) and m.p. 134 °C (Eltex P KS400 by Solvay). The other resins have already been identified in Table I.

TABLE V

|  | (i) (µm) | (v'') (µm) | (iv) (µm) | (v) (µm) | Irrad. dosage (kGy) | (ii)(µm) | (v') (µm) | (iii) (µm) |
|---|---|---|---|---|---|---|---|---|
| Ex. 37 | EC2 (11) | EVA1 (3) | EPBT1 (16) | EVA1 (3) | 0 | PVDC2 (5) | EVA1 (7) | ION (3) |
| Ex. 38 | EC2 (11) | EVA1 (3) | EPBT1 (16) | EVA1 (3) | 40 | PVDC2 (5) | EVA1 (7) | ION (3) |
| Comp. Ex.39 | EC2 (11) | EVA1 (3) | EPC (16) | EVA1 (3) | 0 | PVDC2 (5) | EVA1 (7) | ION (3) |
| Comp. Ex.40 | EC2 (11) | EVA1 (3) | EPC (16) | EVA1 (3) | 40 | PVDC2 (5) | EVA1 (7) | ION (3) |

The % free shrink of the above four structures at 85 °C is reported in Table VI below. These data clearly show the better shrink behaviour of the structures, either irradiated or non-irradiated, containing a propylene-ethylene-($C_4$-$C_8$)-$\alpha$-olefin terpolymer (EPBT1) with respect to the same structures where the terpolymer has been replaced with a propylene-ethylene copolymer (EPC).

TABLE VI

| Structure of | % free shrink at 85 °C (L/T) |
|---|---|
| Ex. no. 37 | 31/40 |
| Ex. no. 38 | 31/42 |
| Comp. Ex. no. 39 | 25/38 |
| Comp. Ex. no. 40 | 26/38 |

## Claims

1.   A multi-layer, bi-axially oriented and bi-axially heat shrinkable, gas-barrier, thermoplastic film comprising:

(i) a first outer layer comprising one or more ethylene homo- or co-polymers;
(ii) a core gas-barrier layer;
(iii) a second outer thermoplastic layer; and
(iv) an inner layer comprising at least a major proportion of one or more propylene-ethylene-($C_4$-$C_8$)-$\alpha$-olefin terpolymers wherein the total amount of ethylene and ($C_4$-$C_8$)-$\alpha$-olefin units is at least 4 % by mole and the amount of propylene units is at least 70 % by mole.

2.   The multi-layer, bi-axially oriented and bi-axially heat shrinkable, gas-barrier, thermoplastic film of claim 1 wherein the ($C_4$-$C_8$)-$\alpha$-olefin in the terpolymer is butene.

3.   The multi-layer, biaxially oriented and bi-axially shrinkable, gas-barrier, thermoplastic film of any of preceding claims 1 and 2 wherein layer (iv) consists of one or more propylene-ethylene-($C_4$-$C_8$)-$\alpha$-olefin terpolymers or of a blend of a major proportion of one or more propylene-ethylene-($C_4$-$C_8$)-$\alpha$-olefin terpolymers with a minor proportion of one or more other thermoplastic resins compatible therewith.

4.   The multi-layer, biaxially oriented and bi-axially shrinkable, gas-barrier, thermoplastic film of claim 3 wherein layer (iv) consists of one or more propylene-ethylene-($C_4$-$C_8$)-$\alpha$-olefin terpolymers or of a blend of a major proportion of one or more propylene-ethylene-($C_4$-$C_8$)-$\alpha$-olefin terpolymers with one or more polymers selected from ethylene homo- and co-polymers, modified ethylene homo- and copolymers, and ethylene-propylene-diene terpolymers.

5.   The multi-layer, biaxially oriented and bi-axially shrinkable, gas-barrier, thermoplastic film of claim 4 wherein layer (iv) consists of at least a major proportion of an ethylene-butene-propylene terpolymer optionally blended with one or more polymers selected from ethylene-vinyl acetate copolymers, ethylene-$\alpha$-olefin copolymers, polyethylenes,

anhydride modified ethylene-vinyl acetate copolymers, anhydride modified ethylene-$\alpha$-olefin copolymers, and EP-DM.

6. The multi-layer, biaxially oriented and bi-axially shrinkable, gas-barrier, thermoplastic film of claim 5 wherein layer (iv) consists of a blend of a major proportion of an ethylene-butene-propylene terpolymer with one or more polymers selected from ethylene-vinyl acetate copolymers, ethylene-$\alpha$-olefin copolymers, anhydride modified ethylene-vinyl acetate copolymers, and anhydride modified ethylene-$\alpha$-olefin copolymers.

7. The multi-layer, biaxially oriented and bi-axially shrinkable, gas-barrier, thermoplastic film of any of preceding claims 1 to 6 wherein the outer layer (iii) comprises one or more polymers selected from ethylene-$\alpha$-olefin copolymers, ethylene-vinyl acetate copolymers, and ionomers.

8. The multi-layer, biaxially oriented and bi-axially shrinkable, gas-barrier, thermoplastic film of claim 7 wherein the outer layer (iii) comprises an ionomer.

9. The multi-layer, biaxially oriented and bi-axially shrinkable, gas-barrier, thermoplastic film of any of preceding claims 1 to 8 wherein the gas-barrier layer comprises PVDC.

10. The multi-layer, biaxially oriented and bi-axially shrinkable, gas-barrier, thermoplastic film of any of preceding claims 1 to 9 wherein the first outer layer (i) comprises one or more polymers independently selected from the group consisting of polyethylene homo-polymers, heterogeneous or homogeneous ethylene-$\alpha$-olefin copolymers, ethylene-vinyl acetate co-polymers, ethylene-ethyl acrylate co-polymers, ethylene-butyl acrylate co-polymers, ethylene-methyl acrylate co-polymers, ethylene-acrylic acid co-polymers, ethylene-methacrylic acid co-polymers, and ionomers.

**Patentansprüche**

1. Mehrschichtige, biaxial orientierte und biaxial wärmeschrumpfbare, thermoplastische Gasbarrierefolie, die

    (i) eine erste äußere Schicht, die ein oder mehrere Ethylenhomo- oder -copolymere umfasst;
    (ii) eine Kern-Gasbarriereschicht;
    (iii) eine zweite äußere thermoplastische Schicht und
    (iv) eine innere Schicht umfasst, die mindestens einen größeren Anteil von einem oder mehreren Propylen-Ethylen- ($C_4$-$C_8$) -$\alpha$-Olefin-Terpolymeren umfasst, wobei die Gesamtmenge der Ethylen- und ($C_4$-$C_8$)-$\alpha$-Olefineinheiten mindestens 4 Mol.% beträgt und die Menge der Propyleneinheiten mindestens 70 Mol.% beträgt.

2. Mehrschichtige, biaxial orientierte und biaxial schrumpfbare, thermoplastische Gasbarrierefolie nach Anspruch 1, bei der das ($C_9$-$C_8$)-$\alpha$-Olefin in dem Terpolymer Buten ist.

3. Mehrschichtige, biaxial orientierte und biaxial schrumpfbare, thermoplastische Gasbarriereschicht nach einem der vorhergehenden Ansprüche 1 und 2, bei der Schicht (iv) aus einem oder mehreren Propylen-Ethylen-($C_4$-$C_8$)-$\alpha$-Olefin-Terpolymeren oder einem Gemisch aus einem größeren Anteil von einem oder mehreren Propylen-Ethylen-($C_4$-$C_8$)-$\alpha$-Olefin-Terpolymeren mit einem geringen Anteil von einem oder mehreren anderen, damit verträglichen thermoplastischen Harzen besteht.

4. Mehrschichtige, biaxial orientierte und biaxial schrumpfbare, thermoplastische Gasbarrierefolie nach Anspruch 3, bei der Schicht (iv) aus einem oder mehreren Propylen-Ethylen-($C_4$-$C_8$)-$\alpha$-Olefin-Terpolymeren oder einem Gemisch aus einem größeren Anteil von einem oder mehreren Propylen-Ethylen-($C_4$-$C_8$)-$\alpha$-olefinterpolymeren mit einem oder mehreren Polymeren ausgewählt aus Ethylenhomo- und -copolymeren, modifizierten Ethylenhomo- und -copolymeren und Ethylen-Propylen-Dien-Terpolymeren besteht.

5. Mehrschichtige, biaxial orientierte und biaxial schrumpfbare, thermoplastische Gasbarrierefolie nach Anspruch 4, bei der Schicht (iv) aus mindestens einem größeren Anteil Ethylen-Buten-Propylen-Terpolymer besteht, das gegebenenfalls mit einem oder mehreren Polymeren ausgewählt aus Ethylen-Vinylacetat-Copolymeren, Ethylen-$\alpha$-Olefin-Copolymeren, Polyethylenen, anhydridmodifizierten Ethylen-Vinylacetat-Copolymeren, anhydridmodifizierten Ethylen-$\alpha$-Olefin-Copolymeren und EPDM gemischt ist.

**6.** Mehrschichtige, biaxial orientierte und biaxial schrumpfbare, thermoplastische Gasbarrierefolie nach Anspruch 5, bei der Schicht (iv) aus einem Gemisch aus einem größeren Anteil eines Ethylen-Buten-Propylen-Terpolymers mit einem oder mehreren Polymeren ausgewählt aus Ethylen-Vinylacetat-Copolymeren, Ethylen-$\alpha$-Olefin-Copolymeren, anhydridmodifizierten Ethylen-Vinylacetat-Copolymeren und anhydridmodifizierten Ethylenalpha-Olefin-Copolymeren besteht.

**7.** Mehrschichtige, biaxial orientierte und biaxial schrumpfbare, thermoplastische Gasbarrierefolie nach einem der vorhergehenden Ansprüche 1 bis 6, bei der die äußere Schicht (iii) ein oder mehrere Polymere ausgewählt aus Ethylen-$\alpha$-Olefin-Copolymeren, Ethylen-Vinylacetat-Copolymeren und Ionomeren umfasst.

**8.** Mehrschichtige, biaxial orientierte und biaxial schrumpfbare, thermoplastische Gasbarrierefolie nach Anspruch 7, bei der die äußere Schicht (iii) ein Ionomer umfasst.

**9.** Mehrschichtige, biaxial orientierte und biaxial schrumpfbare, thermoplastische Gasbarrierefolie nach einem der vorhergehenden Ansprüche 1 bis 8, bei der die Gasbarriereschicht PVDC umfasst.

**10.** Mehrschichtige, biaxial orientierte und biaxial schrumpfbare, thermoplastische Gasbarrierefolie nach einem der vorhergehenden Ansprüche 1 bis 9, bei der die erste äußere Schicht (i) ein oder mehrere Polymere umfasst, die unabhängig aus der Gruppe bestehend aus Polyethylenhomopolymeren, heterogenen oder homogenen Ethylen-$\alpha$-Olefin-Copolymeren, Ethylen-Vinylacetat-Copolymeren, Ethylen-Ethylacrylat-Copolymeren, Ethylen-Butylacrylat-Copolymeren, Ethylen-Methylacrylat-Copolymeren, Ethylen-Acrylsäure-Copolymeren, Ethylen-Methacrylsäure-Copolymeren und Ionomeren ausgewählt sind.

## Revendications

**1.** Film thermoplastique multicouche, biaxialement orienté et biaxialement thermorétractable, formant barrière contre les gaz comprenant :

    (i) une première couche externe comprenant un ou plusieurs homo- ou copolymères d'éthylène ;
    (ii) une couche d'âme formant barrière contre les gaz ;
    (iii) une seconde couche thermoplastique externe ; et
    (iv) une couche interne comprenant au moins une proportion majeure d'un ou plusieurs terpolymères de propylène-éthylène-$\alpha$-oléfine ($C_4$-$C_8$) où la quantité totale des unités d'éthylène et d'$\alpha$-oléfine ($C_4$-$C_8$) est d'au moins 4% en moles et la quantité d'unités de propylène est d'au moins 70% en moles.

**2.** Film thermoplastique multicouche, biaxialement orienté et biaxialement thermorétractable, formant barrière contre les gaz, de la revendication 1, où l'a-oléfine ($C_4$-$C_8$) dans le terpolymère est du butène.

**3.** Film thermoplastique multicouche, biaxialement orienté et biaxialement rétractable, formant barrière contre les gaz, de l'une des revendications 1 et 2 qui précèdent où la couche (iv) consiste en un ou plusieurs terpolymères de propylène-éthylène-$\alpha$-oléfine ($C_4$-$C_8$) ou un mélange d'une proportion majeure d'un ou plusieurs terpolymères de propylène-éthylène-$\alpha$-oléfine ($C_4$-$C_8$) avec une proportion mineure d'une ou plusieurs autres résines thermoplastiques compatibles.

**4.** Film thermoplastique multicouche, biaxialement orienté et biaxialement rétractable formant barrière contre les gaz, de la revendication 3, où la couche (iv) consiste en un ou plusieurs terpolymères de propylène-éthylène-$\alpha$-oléfine ($C_4$-$C_8$) ou un mélange d'une proportion majeure d'un ou plusieurs terpolymères de propylène-éthylène-$\alpha$-oléfine ($C_4$-$C_8$) avec un ou plusieurs polymères sélectionnés parmi des homo- et copolymères d'éthylène, des homo- et copolymères d'éthylène modifiés et des terpolymères d'éthylène-propylène-diène.

**5.** Film thermoplastique multicouche, biaxialement orienté et biaxialement rétractable, formant barrière contre les gaz, de la revendication 4, où la couche (iv) consiste en au moins une proportion majeure d'un terpolymère d'éthylène-butène-propylène facultativement mélangé à un ou plusieurs polymères sélectionnés parmi des copolymères d'éthylène-acétate de vinyle, des copolymères d'éthylène-$\alpha$-oléfine, des polyéthylènes, des copolymères d'éthylène-acétate de vinyle modifiés par de l'anhydride, des copolymères d'éthylène-$\alpha$-oléfine modifiés par de l'anhydride et EPDM.

**6.** Film thermoplastique multicouche, biaxialement orienté et biaxialement rétractable, formant barrière contre les gaz, de la revendication 5, où la couche (iv) consiste en un mélange d'une proportion majeure d'un terpolymère d'éthylène-butène-propylène avec un ou plusieurs polymères sélectionnés parmi des copolymères d'éthylène-acétate de vinyle, des copolymères d'éthylène-$\alpha$-oléfine, des copolymères d'éthylène-acétate de vinyle modifiés à l'anhydride et des copolymères d'éthylène-$\alpha$-oléfine modifiés à l'anhydride.

**7.** Film thermoplastique multicouche, biaxialement orienté et biaxialement rétractable, formant barrière contre les gaz, de l'une des revendications 1 à 6 qui précèdent, où la couche externe (iii) comprend un ou plusieurs polymères sélectionnés parmi des copolymères d'éthylène-$\alpha$-oléfine, des copolymères d'éthylène-acétate de vinyle et des ionomères.

**8.** Film thermoplastique multicouche, biaxialement orienté et biaxialement rétractable, formant barrière contre les gaz, de la revendication 7, où la couche externe (iii) comprend un ionomère.

**9.** Film thermoplastique multicouche, biaxialement orienté et biaxialement rétractable, formant barrière contre les gaz, de l'une des revendications précédentes 1 à 8, où la couche formant barrière contre les gaz comprend du PVDC.

**10.** Film thermoplastique multicouche, biaxialement orienté et biaxialement rétractable, formant barrière contre les gaz, de l'une des revendications 1 à 9 qui précèdent, où la première couche externe (i) comprend un ou plusieurs polymères indépendamment sélectionnés dans le groupe consistant en homopolymères de polyéthylène, copolymères hétérogènes ou homogènes d'éthylène-$\alpha$-oléfine, copolymères d'éthylène-acétate de vinyle, copolymères d'éthylène-acrylate d'éthyle, copolymères d'éthylène-acrylate de butyle, copolymères d'éthylène-acrylate de méthyle, copolymères d'éthylène-acide acrylique, copolymères d'éthylène-acide méthacrylique et ionomères.

**EP 1 563 990 B1**

## REFERENCES CITED IN THE DESCRIPTION

**Patent documents cited in the description**

- US 3821182 A
- US 3741253 A
- EP 92897 A
- EP 202814 A
- EP 204918 A
- EP 292894 A
- US 5041316 A
- EP 613772 A
- EP 597502 A
- EP 600425 A
- US 20010008660 A